# EUROPÄISCHE PATENTANMELDUNG

(11) **EP 0 741 211 A1**
(43) Veröffentlichungstag der Anmeldung: **06.11.1996**
(21) Anmeldenummer: 96810272.3
(22) Anmeldetag: 29.04.1996
(51) Int. Cl.: E04B 1/61, E04H 4/00, F16B 5/00

(54) **Wand aus lösbar miteinander verbundenen Wandsegmenten**

(30) Priorität: 03.05.1995 CH 1267/95; 22.05.1995 CH 1508/95; 27.02.1996 CH 503/96
(71) Anmelder: Alusuisse Technology & Management AG, 8212 Neuhausen am Rheinfall (CH)
(72) Erfinder: Bregenzer, René, 8212 Neuhausen (CH); Meier, Johannes, 8254 Basadingen (CH); Wetzstein, Ernst, 78250 Büsslingen (DE)

(57) **Zusammenfassung**

Bei einer Wand aus lösbar miteinander verbundenen Wandsegmenten (12) mit stirnseitig beidseits abragenden Verbindungsgliedern (18) für den seitlichen Anschluss an benachbarte Wandsegmente (12) sind die zwei Verbindungsglieder (18) jedes Wandsegmentes (12) querschnittlich identisch geformt und erstrecken sich als bezüglich einer vertikalen Segmentachse symmetrisch zueinander stehende Profile im wesentlichen über die gesamte Wandhöhe (h). Jedes Verbindungsglied (18) weist ein querschnittlich hakenförmiges, eine Lagerrinne (36) umschliessendes Lagerteil (34) auf, dessen freies Ende (40) mit dem Lagerteil (34) des Verbindungsgliedes (18) eines benachbarten Wandsegmentes (12) in Eingriff steht. Die Breite (s) der Oeffnung (38) der Lagerrinne (36) ist hierbei nur wenig grösser als die Höhe (t) des Hakens (35) des Lagerteils (34).

Eine kreisförmig geschlossene Wand kann mit innenseitig angeordneter Hülle als Wasserbecken (10) eingesetzt werden.

## Beschreibung

Die Erfindung betrifft eine Wand aus lösbar miteinander verbundenen Wandsegmenten mit stirnseitig beidseits abragenden Verbindungsgliedern für den seitlichen Anschluss an benachbarte Wandsegmente.

Zum lösbaren Verbinden wandartiger Teile ist es beispielsweise aus der DE-C-812 130 bekannt, die randständigen Verbindungsglieder benachbarter Wandsegmente längsseitig ineinanderzuschieben. Mit dieser vorbekannten Verbindungsart zusammengebaute Wandsegmente können seitlich nicht auseinandergleiten. Besonders bei hohen Wandsegmenten erfordert jedoch der Zusammenbau der einzelnen Wandsegmente ein erhebliches Mass an Kraft und Geschicklichkeit.

Angesichts dieser Gegebenheiten hat sich der Erfinder die Aufgabe gestellt, eine Wand der eingangs erwähnten Art zu schaffen, die mit wenigen Handgriffen stabil aufgebaut und nach Gebrauch ebenso rasch wieder in ihre Einzelteile zerlegt werden kann. Zudem sollen die Wandsegmente stapelbar sein.

Zur erfindungsgemässen Lösung der Aufgabe führt, dass die zwei Verbindungsglieder jedes Wandsegmentes querschnittlich identisch geformt sind und sich bezüglich einer vertikalen Segmentachse als symmetrisch zueinander stehende Profile im wesentlichen über die gesamte Wandhöhe erstrecken, wobei jedes Verbindungsglied ein querschnittlich hakenförmiges, eine Lagerrinne umschliessendes Lagerteil aufweist, dessen freies Ende mit dem Lagerteil des Verbindungsgliedes eines benachbarten Wandsegmentes in Eingriff steht und wobei die Breite der Oeffnung der Lagerrinne nur wenig grösser ist als die Höhe des Hakens des Lagerteils.

Mit der letztgenannten Massnahme ist ein Zusammenbau zweier benachbarter Wandsegmente praktisch nur dann möglich, wenn diese nicht oder nur wenig von ihrer parallelen Ausrichtung abweichen. Andererseits genügt bereits eine schwache Anwinkelung benachbarter Wandsegmente nach dem Zusammenfügen, um ein Auseinandergleiten zu verhindern.

Bei einer bevorzugten Ausführungsform der Erfindung ist die Differenz zwischen der Breite der Oeffnung der Lagerrinne und der Höhe des Hakens des Lagerteils derart bemessen, dass die Einführung bzw. die Herausführung des freien Endes des Lagerteils eines Verbindungsgliedes in die bzw. aus der Lagerrinne des benachbarten Verbindungsgliedes nur innerhalb eines von der parallelen Ausrichtung zweier benachbarter Wandsegmente abweichenden maximalen Einbauwinkels von etwa 10 bis 15° möglich ist. Demzufolge sind benachbarte Wandsegmente in Gebrauchslage bevorzugt um einen Winkel von mindestens etwa 20° bezüglich der parallelen Ausrichtung abgewinkelt angeordnet.

Die zwei Verbindungsglieder jedes Wandsegmentes können mit einem Plattenelement, insbesondere mit einem Blech aus Metall, verschweisst sein.

Bei einer anderen Variante nehmen die zwei Verbindungsglieder jedes Wandsegmentes zwischen parallelen Schenkelstreifen von einander zugekehrten, querschnittlich etwa U-förmigen Rinnen ein Plattenelement auf. Hierbei sind die Kantenbereiche des Plattenelementes zwischen den Verbindungsgliedern zweckmässigerweise von einem querschnittlich etwa U-förmigen Abdeckprofil übergriffen.

Bei einer bevorzugten Ausführungsform der Erfindung sind die Wandsegmente bzw. die Plattenelemente aus einem flexiblen Werkstoff gefertigt. Der Vorteil dieser flexiblen Ausgestaltung der Wand liegt insbesondere darin, dass sie kreisförmig geschlossen als flexible Seitenwand eines Behälters für Flüssigkeiten und Schüttgüter eingesetzt werden kann. Unter dem Innendruck des befüllten Behälters biegen sich die Wandsegmente bzw. Plattenelemente nach aussen, so dass sich der Behälter in Draufsicht einem nahezu kreisförmigen Querschnitt nähert. Dadurch ergibt sich in optimaler Weise eine gleichmässige Druckverteilung auf die Behälterwand. Durch die flexible Ausgestaltung der Wandsegmente bzw. Plattenelemente nehmen diese nach der Entleerung und Demontage des Behälters ihre ursprüngliche, flache Lage wieder ein und können so problemlos gestapelt werden. Als flexibler Werkstoff für die Wandsegmente bzw. Plattenelemente können beispielsweise Bleche aus Metall, insbesondere aus Stahl oder Aluminium, eingesetzt werden. Grundsätzlich sind jedoch alle Werkstoffe geeignet, die neben der geforderten Flexibilität den unter gegebenen Einsatzbedingungen an die mechanische Festigkeit sowie an die Stabilität der Wand gestellten Anforderungen genügen. Als weitere mögliche Werkstoffe kommen daher beispielsweise auch Kunststoffe, ggf. in Verbund oder verstärkt mit anderen Materialien, in Betracht.

Bei einer weiteren Ausführungsform der Erfindung sind die Verbindungsglieder und die Abdeckprofile aus Leichtmetall, insbesondere aus Aluminium, stranggepresst und die Plattenelemente aus einem beidseitig mit Deckblechen aus Aluminium beplankten leichtgewichtigen Kern, insbesondere einem Wabenkern, aufgebaut. Geeignete Wabenkerne sind beispielsweise aus Aluminium, Kunststoff oder einem anderen Werkstoff gefertigt. Zur Bereitstellung eines verwindungssteifen Wandsegments ist es zudem vorteilhaft, die Verbindungsglieder, die Abdeckprofile und die Deckbleche der Plattenelemente miteinander zu verbinden. Die Verbindungstechnik richtet sich nach der Art der zu verbindenden Werkstoffe. Als Beispiele seien hier Schweissen, Nieten und Kleben genannt.

Das vorstehend beschriebene, aus Aluminium aufgebaute Wandsegment weist ein optimales Verhältnis zwischen Eigengewicht und mechanischer Festigkeit auf. Die erfindungsgemässe Ausgestaltung des Wandsegmentes ist jedoch nicht auf die Verwendung von Aluminium als Konstruktionswerkstoff beschränkt. Je nach vorgegebenen Anforderungen an das Gewicht und die mechanische Festigkeit können andere bekannte Konstruktionswerkstoffe wie beispielsweise andere Metalle, Holz, Kunststoffe und Verbundwerkstoffe aller Art eingesetzt werden.

Zur Verbesserung der Stapelbarkeit der Wandsegmente in Form von Plattenelementen aus Deckblechen und Kern können an den Schenkelstreifen des Abdeckprofils einander gegenüberliegende, um ein Mass gegeneinander versetzte wulstartige Ausformungen vorgesehen sein. Mit dieser Massnahme lassen sich die einzelnen Wandsegmente prismenartig aufeinander stapeln. Die Passgenauigkeit der Ausformungen führen zu einem insgesamt stabilen Stapel.

Es versteht sich von selbst, dass die erfindungsgemässe, aus einzelnen Wandsegmenten zusammengesetzte Wand insgesamt nicht eine einzige ebene Wandfläche bildet. Bei jeder Stoss-stelle schliessen benachbarte Wandsegmente jeweils einen Winkel ein. Da bezüglich der parallelen Ausrichtung zweier benachbarter Wandsegmente die Abwinkelung auf beide Seiten erfolgen kann, lassen sich unzählige Wandformen mit praktisch beliebiger Grundrissform gestalten. Ein Anwendungsgebiet wird daher im Bereich der sogenannten Stellwände gesehen.

Insbesondere im Anwendungsgebiet der Stellwände kann es wünschenswert sein, zumindest einen Teil der Stellwand als ebene Fläche auszugestalten, d.h. benachbarte Wandsegmente im wesentlichen parallel zueinander auszurichten. Damit die in dieser Lage voneinander lösbaren Wandsegmente nicht unbeabsichtigt auseinanderfallen, ist bei einer weiteren bevorzugten Ausführungsform der erfindungsgemässen Wand vorgesehen, dass zur gegenseitigen Arretierung zweier benachbarter Wandsegmente bei im wesentlichen paralleler Ausrichtung im freien Bereich der Oeffnung der Lagerrinne zumindest eines der Verbindungsglieder ein Sperrelement oder Distanzhalter angeordnet ist. Dieser Distanzhalter kann beispielsweise ein Spreizelement aus vorzugsweise elastischem Material sein, das leicht in den freien Bereich der Oeffnung eingedrückt und auch wieder entfernt werden kann. Eine andere Möglichkeit ergibt sich beispielsweise durch die Anordnung eines Riegels, der vorzugsweise durch Federkraft in Arretierstellung gehalten wird.

Mit einer Innenhülle ausgestattet kann eine kreisförmig geschlossene erfindungsgemässe Wand als vielseitig verwendbares und schnell zu montierendes Wasserbecken eingesetzt werden und beispielsweise in Katastrophenfällen als Wasserbehälter dienen. Insbesondere für den Einsatz im Armee- und Zivilschutzbereich ist eine schnelle und einfache Montage bei grösstmöglicher Funktionssicherheit von wesentlicher Bedeutung. Daneben ist eine gute Stapelbarkeit erwünscht.. Diese Eigenschaften sind bei der erfindungsgemässen Wand in optimaler Weise erfüllt.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in:
- Fig. 1 ein aus Wandsegmenten aufgebautes Wasserbecken;
- Fig. 2 die Draufsicht auf ein Wandsegment;
- Fig. 3 einen Querschnitt durch das Wandsegment von Fig. 2 nach deren Linie I-I;
- Fig. 4 einen Querschnitt durch das Wandsegment von Fig. 2 nach deren Linie II-II;
- Fig. 5 einen vergrösserten Ausschnitt von Fig. 3;
- Fig. 5a einen Querschnitt durch ein weiteres Wandsegment im Verbindungsbereich;
- Fig. 6 einen vergrösserten Ausschnitt von Fig. 4;
- Fig. 7 - 10 Verbindungsglieder in unterschiedlichen Eingriffspositionen;
- Fig. 11, 12 eine Stapelanordnung von zwei Wandsegmenten im Querschnitt entsprechend Fig. 3 und 4.

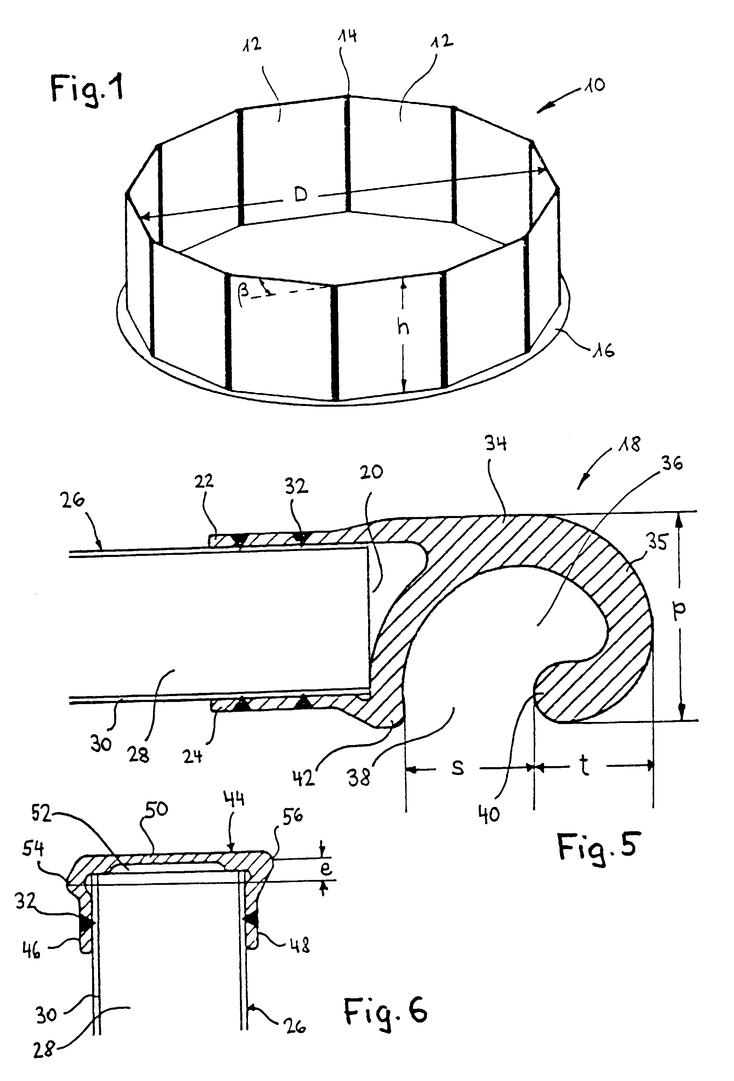

Ein in Fig. 1 gezeigtes Wasserbecken 10 weist eine ringförmige Wand auf, die aus einzelnen, an Stossstellen 14 miteinander lösbar verbundenen Wand- oder Mantelsegmenten 12 zusammengesetzt ist. Diese ringförmige Wand steht auf einer Bodenplane 16. Die Dichtigkeit des Wasserbeckens 10 wird durch eine aus Gründen der besseren Uebersicht nicht dargestellte Innenhülle erreicht.

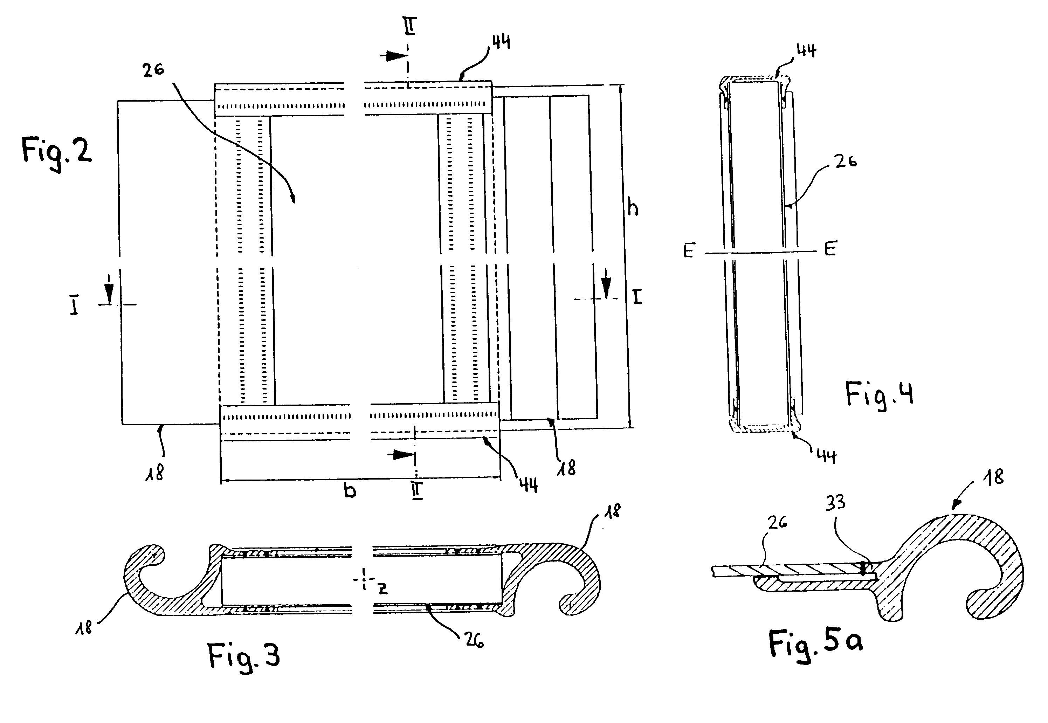

Ein Wandsegment 12 weist gemäss Fig. 2 bis 4 ein Plattenelement 26 mit seitlich angeordneten Verbindungsgliedern 18 auf. Diese Verbindungsglieder 18 sind vorzugsweise aus Aluminium stranggepresst und erstrecken sich im wesentlichen über die gesamte Höhe h des Plattenelements 26, welches zwischen den parallelen Schenkelstreifen 22, 24 einer am Verbindungsglied 18 angeformten U-förmigen Rinne 20 gehalten ist. Das Plattenelement 26 besteht aus einem Plattenkern 28 aus beispielsweise einem Aluminium-Wabenkern und ist beidseitig mit Deckblechen 30 aus Aluminium beplankt. Die horizontalen Kantenbereiche des Plattenelementes 26 zwischen den Verbindungsgliedern 18 sind von einem querschnittlich etwa U-förmigen Abdeckprofil 44 mit von einem Bodenstreifen 50 abragenden parallelen Schenkelstreifen 46, 48 übergriffen.

Die Schenkelstreifen 22, 24 des Verbindungsgliedes 18 sowie die Schenkelstreifen 46, 48 des Abdeckprofils 44 sind mit den Deckblechen 30 des Plattenelementes 26 über Schweissstellen 32 verbunden, so dass sich insgesamt ein stabiles und verwindungssteifes Wandsegment 12 ergibt.

Die Verbindungsglieder 18 sind bezüglich einer vertikalen Symmetrieachse z des Plattenelementes 26 symmetrisch zueinander angeordnet, d.h. sie sind um 180° gegeneinander verdreht. Die Abdeckprofile 44 liegen einander spiegelbildlich bezüglich einer horizontalen Symmetrieebene E des Plattenelementes 26 gegenüber.

Gemäss Fig. 5 weist das Verbindungsglied 18 ein hakenförmiges Lagerteil 34 auf, welches eine Lagerrinne 36 umschliesst und dessen Oeffnung 38 mit der Oberfläche des Plattenelementes 26 fluchtet. Die Oeffnung 38 ist begrenzt durch das wulstartig ausgebildete freie Ende 40 des hakenförmigen Lagerteils 34 sowie eine dem freien Ende 40 gegenüberliegende Nasenleiste 42.

Die Breite s der Oeffnung 38 der Lagerrinne 36 ist nur wenig grösser als die Höhe t des eigentlichen Hakens 35 des hakenförmigen Lagerteils 34. Die Breite p des Hakens 35 entspricht praktisch der doppelten Hakenhöhe t. Mit diesen Abmessungsvorgaben wird der Einbauwinkel α eng begrenzt. Gleichzeitig ergibt sich ein Gebrauchslagewinkel β, der in weiten Grenzen variiert werden kann.

Bei der in Fig. 5a gezeigten Ausführungsvariante ist als Plattenelement 26 eine flexible Platte bzw. ein Blech aus Metall, beispielsweise aus Stahl oder aus Aluminium, mit einem am Verbindungsglied 18 angeformten Schweisssteg 33 stumpf verschweisst.

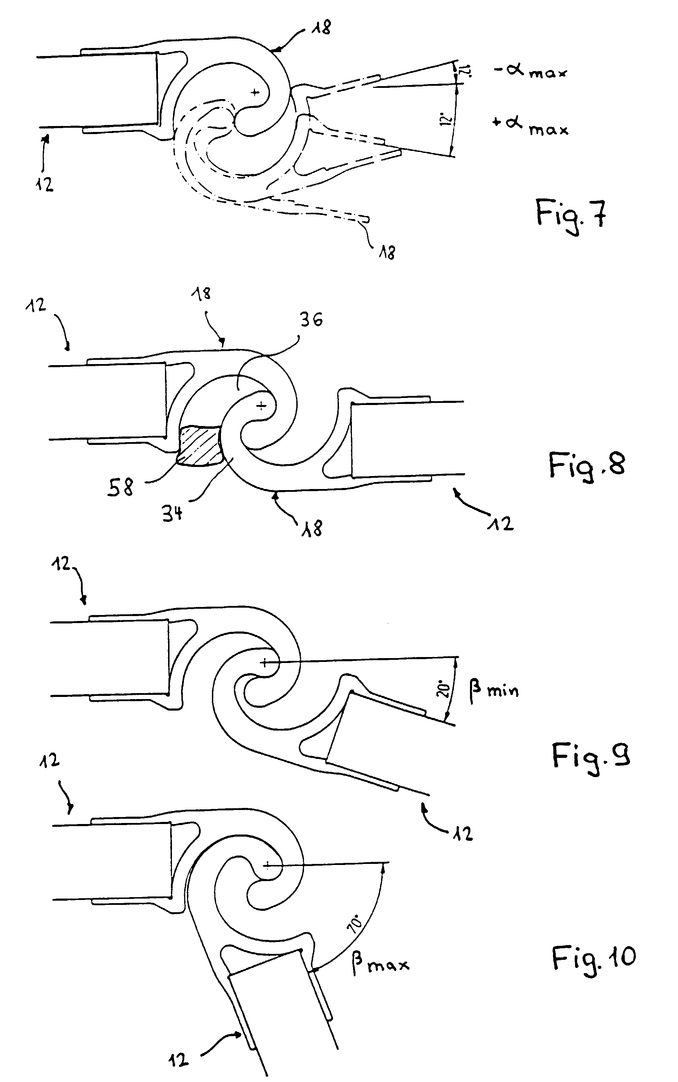

Wie insbesondere aus Fig. 7 bis 10 hervorgeht, ergibt sich beim gewählten Ausführungsbeispiel ein maximaler Einbauwinkel α von ±12° (Fig. 7), d.h. das seitliche Einschieben des hakenförmigen Lagerteils 34 des einen Verbindungsgliedes 18 in die Lagerrinne 36 des benachbarten Verbindungsgliedes 18 ist nur innerhalb einer Abweichung von 12° bezüglich der aus Fig. 8 ersichtlichen parallelen Ausrichtung der zusammenzubauenden Wandsegmente 12 möglich. Fig. 9 zeigt den in der Praxis etwa einzuhaltenden minimalen Gebrauchslagewinkel βmin von 20°, bei welchem ein Herausgleiten des Lagerteils 34 aus der Lagerrinne 36 nicht mehr möglich ist. Der aus Fig. 10 ersichtliche maximale Gebrauchslagewinkel βmax beträgt beim gewählten Ausführungsbeispiel etwa 70°.

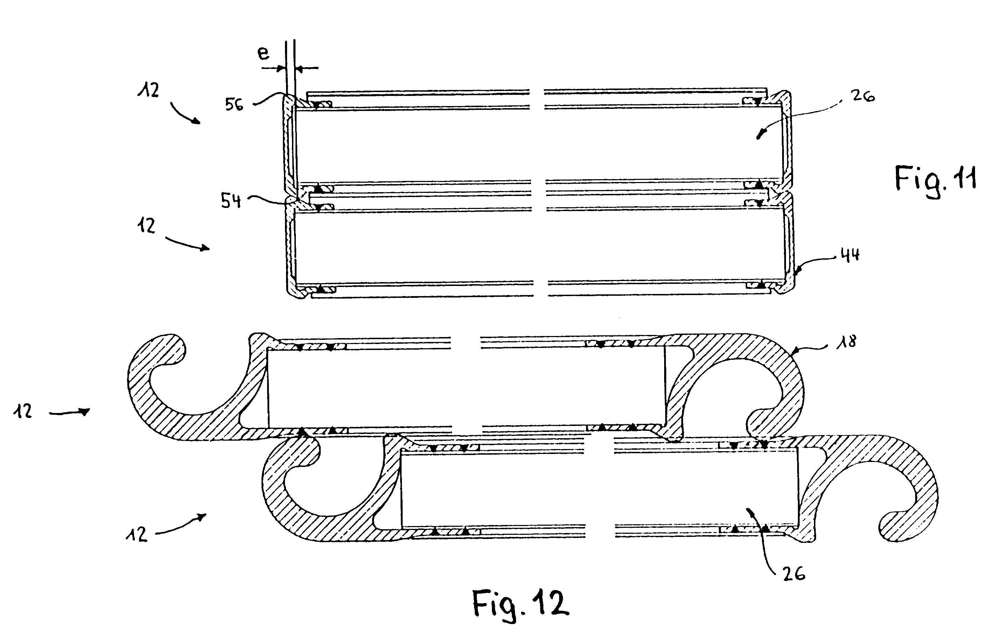

Die gute Stapelbarkeit der Wandsegmente 12 in Form von Plattenelementen aus Deckblechen und Kern ergibt sich ohne weiteres aus der Betrachtung von Fig. 11 und 12. Einen wesentlichen Beitrag zur guten Stapelbarkeit leistet hierbei die besondere Ausgestaltung des in Fig. 6 dargestellten Querschnitts der Abdeckprofile 44. Die Schenkelstreifen 46, 48 weisen im Bereich des Bodenstreifens 50 seitlich abragende wulstartige Ausformungen 54, 56 auf. Diese Ausformungen 54, 56 sind um ein Mass e gegeneinander versetzt. Dieses Versetzungsmass e führt zu einem stabilen Sitz der zur Lagerung aufeinander gestapelten Wandsegmente 12.

Das in Fig. 2 bis 4 dargestellte Wandsegment 12 weist bei einer Höhe b von 1,5 m und einer Breite b von 1,25 m ein Gewicht von ca. 22 kg auf. In der nachfolgenden Tabelle sind die Kenndaten von aus diesen Wandsegmenten zusammengesetzten Wasserbecken unterschiedlicher Grössen beispielhaft zusammengestellt.

| Anzahl Wandsegmente | Durchmesser D (m) | Höhe h (m) | Inhalt (m3) | Gewicht (ca.kg) |
|---|---|---|---|---|
| 7 | 3 | 1,5 | 11 | 154 |
| 10 | 4,2 | 1,5 | 21 | 220 |
| 12 | 5 | 1,5 | 30 | 264 |
| 15 | 6,2 | 1,5 | 46 | 330 |
| 17 | 7 | 1,5 | 58 | 374 |

Zur Sicherung von zwei Wandelementen bei paralleler Ausrichtung gegen unbeabsichtigtes Auseinandergleiten ist in Fig. 8 ein Spreizelement 58 aus einem elastischen Material in den freien Bereich der Oeffnung 38 der Lagerrinne eines der Verbindungsglieder 18 eingesetzt.

## Patentansprüche

1. Wand aus lösbar miteinander verbundenen Wandsegmenten (12) mit stirnseitig beidseits abragenden Verbindungsgliedern (18) für den seitlichen Anschluss an benachbarte Wandsegmente,
dadurch gekennzeichnet, dass die zwei Verbindungsglieder (18) jedes Wandsegmentes (12) querschnittlich identisch geformt sind und sich als bezüglich einer vertikalen Segmentachse (z) symmetrisch zueinander stehende Profile im wesentlichen über die gesamte Wandhöhe (h) erstrecken, wobei jedes Verbindungsglied (18) ein querschnittlich hakenförmiges, eine Lagerrinne (36) umschliessendes Lagerteil (34) aufweist, dessen freies Ende (40) mit dem Lagerteil (34) des Verbindungsgliedes (18) eines benachbarten Wandsegmentes (12) in Eingriff steht und wobei die Breite (s) der Oeffnung (38) der Lagerrinne (36) nur wenig grösser ist als die Höhe (t) des Hakens (35) des Lagerteils (34).

2. Wand nach Anspruch 1, dadurch gekennzeichnet, dass die Differenz zwischen der Breite (s) der Oeffnung (38) der Lagerrinne (36) und der Höhe (t) des Hakens (35) des Lagerteils (34) derart bemessen ist, dass die Einführung bzw. die Herausführung des freien Endes (40) des Lagerteils (34) eines Verbindungsgliedes (18) in die bzw. aus der Lagerrinne (36) des benachbarten Verbindungsgliedes (18) nur innerhalb eines von der parallelen Ausrichtung zweier benachbarter Wandsegmente (12) abweichenden maximalen Einbauwinkels (α) von etwa 10 bis 15° möglich ist.

3. Wand nach Anspruch 2, dadurch gekennzeichnet, dass benachbarte Wandsegmente (12) in Gebrauchslage bezüglich der parallelen Ausrichtung um einen Winkel (β) von mindestens etwa 20° abgewinkelt angeordnet sind.

4. Wand nach einem der Ansprüche 1 bis 3, dadurch gekennzeichnet, dass die zwei Verbindungsglieder (18) jedes Wandsegmentes (12) mit einem Plattenelement (26), insbesondere mit einem Blech aus Metall, verschweisst sind.

5. Wand nach einem der Ansprüche 1 bis 3, dadurch gekennzeichnet, dass die zwei Verbindungsglieder (18) jedes Wandsegmentes (12) zwischen parallelen Schenkelstreifen (22,24) von einander zugekehrten, querschnittlich etwa U-förmigen Rinnen (20) ein Plattenelement (26) aufnehmen.

6. Wand nach Anspruch 5, dadurch gekennzeichnet, dass die Kantenbereiche des Plattenelementes (26) zwischen den Verbindungsgliedern (18) von einem querschnittlich etwa U-förmigen Abdeckprofil (44) übergriffen sind.

7. Wand nach einem der Ansprüche 1 bis 6, dadurch gekennzeichnet, dass die Wandsegmente (12) bzw. Plattenelemente (26) aus einem flexiblen Werkstoff, insbesondere aus einem Blech oder einer Platte aus Metall oder Kunststoff, ggf. im Verbund oder verstärkt mit weiteren Materialien, gefertigt sind.

8. Wand nach einem der Ansprüche 1 bis 7, dadurch gekennzeichnet, dass die Verbindungsglieder (18) und die Abdeckprofile (44) aus Leichtmetall, insbesondere aus Aluminium, stranggepresst sind.

9. Wand nach einem der Ansprüche 1 bis 8, dadurch gekennzeichnet, dass die Plattenelemente (26) aus einem beidseitig mit Deckblechen (30) aus Aluminium beplankten, leichtgewichtigen Kern (28), insbesondere einem Wabenkern, aufgebaut sind.

10. Wand nach einem der Ansprüche 6 bis 9, dadurch gekennzeichnet, dass die Verbindungsglieder (18), die Abdeckprofile (44) und die Deckbleche (30) der Plattenelemente (26) miteinander insbesondere durch Schweissen, Nieten oder Kleben zu einem verwindungssteifen Wandsegment (12) verbunden sind.

11. Wand nach Anspruch 6, dadurch gekennzeichnet, dass zur Verbesserung der Stapelbarkeit der Wandsegmente (12) an den Schenkelstreifen (46,48) des Abdeckprofils (44) einander gegenüberliegende, um ein Mass (e) gegeneinander versetzte wulstartige Ausformungen (54,56) vorgesehen sind.

12. Wand nach einem der Ansprüche 1 bis 11, dadurch gekennzeichnet, dass zur gegenseitigen Arretierung zweier benachbarter Wandsegmente (12) bei im wesentlichen paralleler Ausrichtung im freien Bereich der Oeffnung (38) der Lagerrinne (36) zumindest eines der Verbindungsglieder (18) ein Sperrelement oder Distanzhalter angeordnet ist.

13. Wand nach Anspruch 12, dadurch gekennzeichnet, dass der Distanzhalter ein Spreizelement (58) aus vorzugsweise elastischem Material ist.

14. Wand nach Anspruch 12, dadurch gekennzeichnet, dass der Distanzhalter ein vorzugsweise durch Federkraft in Arretierstellung gehaltener Riegel ist.

15. Verwendung einer Wand nach einem der Ansprüche 1 bis 14 als Stellwand.

16. Verwendung einer kreisförmig geschlossenen Wand nach einem der Ansprüche 1 bis 14 mit innenseitig angeordneter Hülle als Wasserbecken (10).

17. Verwendung einer kreisförmig geschlossenen Wand nach Anspruch 7 als flexible Seitenwand eines Behälters für Flüssigkeiten und Schüttgüter.
